# EUROPEAN PATENT APPLICATION

(11) **EP 4 527 908 A1**
(43) Date of publication of application: **26.03.2025**
(21) Application number: 23807536.0
(22) Date of filing: 11.05.2023
(51) Int. Cl.: C10B 53/07, C08J 11/12, C10G 1/10

(54) **CONTINUOUS ORGANIC MATTER PYROLYSIS DEVICE AND CONTINUOUS ORGANIC MATTER PYROLYSIS METHOD**

(30) Priority: 16.05.2022 JP 2022080437
(71) Applicant: Environment Energy Co., Ltd., Fukuyama-shi, Hiroshima 721-0952 (JP); Idemitsu Kosan Co.,Ltd., Tokyo 100-8321 (JP)
(72) Inventor: NODA, Shuji, Fukuyama-shi, Hiroshima 721-0952 (JP); FUJIMOTO, Kaoru, Kitakyushu-shi, Fukuoka 808-0135 (JP)
(74) Representative: TBK
(86) International application number: PCT/JP2023/017714
(87) International publication number: WO 2023/223932

(57) **Abstract**

A continuous organic matter pyrolysis device 1 includes: a charging section 10 that continuously charges an organic matter; a vertical vessel 12 for accommodating the organic matter charged from the charging section 10, a stirring means 14 that is provided in the vertical vessel 12 and that stirs the organic matter, a first heating means 16 that heats the vertical vessel 12 to pyrolyze and gasify the organic matter, a lead-out section 18 connected to an upper portion of the vertical vessel 12 and including a lead-out path 22 through which the pyrolysis gas of the organic matter is led out, and a discharging section 20 connected to a lower portion of the vertical vessel 12 and including a discharge path 28 through which an organic matter residue is continuously discharged.

## Description

### TECHNICAL FIELD

The present invention relates to a continuous organic matter pyrolysis device and a continuous organic matter pyrolysis method that continuously pyrolyze an organic matter.

### BACKGROUND ART

Conventionally, pyrolysis devices that pyrolyze organic matters have been used in many fields. In particular, technologies are known in which petrochemical products wastes, such as a waste plastic (waste mainly composed of plastic) and a waste rubber, are pyrolyzed to recover useful components.

As a device for pyrolyzing such petrochemical products wastes, for example, a device including a material charging device, and a rotary kiln-type pyrolysis furnace to which a part of the material charging device is attached is proposed. The material charging device charges and melts a plastic, and the pyrolysis furnace pyrolyzes the melted plastic and recovers a pyrolysis gas. The material charging device includes an inner cylinder extending to the pyrolysis furnace, a material charging port provided on one end side of the inner cylinder, and rotating blades disposed inside the inner cylinder, and having intervals gradually decreasing from a material charging port side to a material discharging port side (see Patent Literature 1).

### CITATION LIST

### Patent Literature

[Patent Literature 1] Japanese Patent Application Laid-Open Publication No. 2009-249576

### SUMMARY OF THE INVENTION

### TECHNICAL PROBLEM

In the conventional pyrolysis device for petrochemical products wastes that uses a simple pyrolysis furnace, decomposition residues such as carbides generated during pyrolysis of the petrochemical products wastes gradually increase in a reactor and coking is caused in the inside of the reactor, resulting in reduction in heat conduction efficiency and processing capacity. Accordingly, the reactor had to be cooled to be cleaned after predetermined processing, which results in a problem that continuous operation cannot be performed.

In addition, in the rotary kiln-type pyrolysis device using a horizontal reactor as recited in the above-described Patent Literature 1, a plurality of iron balls and the like are charged into the reactor for preventing coking. However, pyrolysis is performed mainly at the lower portion of the reactor, which resulted in insufficient prevention of coking and a difficulty in the long-term continuous operation. Furthermore, using the horizontal reactor caused a problem of size increase of the device.

The problem to be solved by the present invention is to provide a continuous organic matter pyrolysis device and a continuous organic matter pyrolysis method that are capable of suppressing a decrease in a heat conduction efficiency to thereby enable efficient continuous organic matter pyrolysis.

### SOLUTION TO PROBLEM

In the course of studying a method for efficiently pyrolyzing an organic matter, the inventors of the present invention have conceived of continuously charging the organic matter into a vertical vessel filled with a solid heat transfer medium, heating and stirring the organic matter in the vertical vessel, recovering a pyrolysis gas, and continuously discharging an organic matter residue from the vertical vessel, and found that such a method enables continuous organic matter pyrolysis to be performed efficiently by preventing coking due to the organic matter residue in the vertical vessel and suppressing the decrease in the heat conduction efficiency in the vertical vessel, to thereby lead to the completion of the present invention.

Specifically, the present invention is as follows.
[1] A continuous organic matter pyrolysis device comprising:
   a charging section that continuously charges an organic matter;
   a vertical vessel for accommodating the organic matter charged from the charging section;
   a stirring means that is provided in the vertical vessel and that stirs the organic matter;
   a first heating means that heats the vertical vessel to pyrolyze and gasify the organic matter,
   a lead-out section connected to an upper portion of the vertical vessel and including a lead-out path through which a pyrolysis gas of the organic matter is led out; and
   a discharging section connected to a lower portion of the vertical vessel and including a discharge path through which an organic matter residue is continuously discharged.
[2] The continuous organic matter pyrolysis device according to [1], further comprising a second heating means that heats the discharge path of the discharging section.
[3] The continuous organic matter pyrolysis device according to [2], wherein the second heating means is a means that heats the discharging section to a temperature higher than a temperature of the vertical vessel.
[4] The continuous organic matter pyrolysis device according to any one of [1] to [3], wherein the discharge path of the discharging section is disposed downward from the lower portion of the vertical vessel.
[5] The continuous organic matter pyrolysis device according to any one of [1] to [3], wherein the discharge path of the discharging section is disposed laterally from the lower portion of the vertical vessel.
[6] The continuous organic matter pyrolysis device according to any one of [1] to [4], wherein
   the discharge path of the discharging section is constituted of a gap formed between an inner surface of a cylindrical body connected to the lower portion of the vertical vessel and an outer surface of a spacer provided inside the cylindrical body, the inner surface tapering toward a bottom portion of the cylindrical body, the spacer tapering toward a bottom portion of the spacer, and
   the discharge path communicates with an opening provided at an outer periphery of a bottom portion of the vertical vessel.
[7] The continuous organic matter pyrolysis device according to any one of [1] to [6], wherein
   the stirring means includes a rotation shaft provided in a vertical direction at a center portion of the vertical vessel, and a stirring blade that is connected to the rotation shaft and that rotates around the rotation shaft.
[8] The continuous organic matter pyrolysis device according to [7], wherein the stirring means is a means that is able to scrape up the organic matter from bottom to top.
[9] The continuous organic matter pyrolysis device according to [7] or [8], wherein the spacer includes a discharge path stirring member on an inclined surface of the spacer, and the spacer is connected to a rotation shaft of the stirring means provided in a vertical direction at a center portion of the vertical vessel and rotates around the rotation shaft.
[10] A continuous organic matter pyrolysis method comprising:
   a continuous charging step of continuously charging an organic matter and a solid heat transfer medium into a vertical vessel filled with the solid heat transfer medium;
   a pyrolysis step of pyrolyzing the organic matter by heating and stirring the organic matter and the solid heat transfer medium that are charged into the vertical vessel in the continuous charging step; and
   a recovery step of recovering a pyrolysis gas generated in the pyrolysis step; and
   a continuous discharging step of continuously discharging an organic matter residue generated in the pyrolysis step to an outside of the vertical vessel with a part of the solid heat transfer medium.
[11] The continuous organic matter pyrolysis method according to [10], wherein the organic matter residue and the solid heat transfer medium that are discharged are heated in the continuous discharging step.
[12] The continuous organic matter pyrolysis method according to [11], wherein, in the continuous discharging step, the organic matter residue and the solid heat transfer medium that are discharged are heated at a temperature higher than a heating temperature in the pyrolysis step.
[13] The continuous organic matter pyrolysis method according to any one of [10] to [12], wherein the organic matter and the solid heat transfer medium are continuously charged such that a charging amount of the organic matter with respect to 100 L of the solid heat transfer medium in the vertical vessel is within a range of 1 to 50 kg/h.
[14] The continuous organic matter pyrolysis method according to any one of [10] to [13], wherein the solid heat transfer medium is a spherical-shaped solid having a diameter of 0.1 µm to 150 mm.
[15] The continuous organic matter pyrolysis method according to any one of [10] to [14], wherein the solid heat transfer medium is at least one type of solid selected from a group consisting of an alkaline earth metal-based solid, a silica-based solid, sand, an alumina-based solid, and a zeolite-based solid.
[16] The continuous organic matter pyrolysis method according to any one of [10] to [15], wherein the organic matter charged in the continuous charging step is a waste plastic or a waste rubber.
[17] The continuous organic matter pyrolysis method according to any one of [10] to [16], wherein the continuous organic matter pyrolysis device as claimed in any one of [1] to [9] is used.
[18] A recycled organic matter recovery system comprising:
   the continuous organic matter pyrolysis device as claimed in any one of [1] to [9];
   an organic matter charging device that continuously charges an organic matter into the continuous organic matter pyrolysis device; and
   a gas recovery device that recovers a pyrolysis gas of the organic matter pyrolyzed in the continuous organic matter pyrolysis device.

### ADVANTAGEOUS EFFECTS OF INVENTION

A continuous organic matter pyrolysis device and a continuous organic matter pyrolysis method according to the present invention are capable of suppressing a decrease in heat conduction efficiency and enabling efficient continuous organic matter pyrolysis.

### BRIEF DESCRIPTION OF THE DRAWINGS

[Figure 1] Fig. 1 is an explanatory view of a continuous organic matter pyrolysis device according to an embodiment of the present invention.
[Figure 2] Fig. 2 is an explanatory view of a vertical vessel and a discharging section of the continuous organic matter pyrolysis device shown in Fig. 1.
[Figure 3] Fig. 3 is an enlarged view of the discharging section of the continuous organic matter pyrolysis device shown in Fig. 1.
[Figure 4] Fig. 4 is an explanatory view of a stirring blade of a continuous organic matter pyrolysis device according to another embodiment of the present invention, and (a) shows a paddle-type stirring blade and (b) shows a gate-type stirring blade.
[Figure 5] Fig. 5 is a photograph of organic matter residue obtained in a continuous discharge test in an example 1.

### DESCRIPTION OF EMBODIMENTS

A continuous organic matter pyrolysis device according to the present invention includes: a charging section that continuously charges an organic matter; a vertical vessel for accommodating the organic matter charged from the charging section; a stirring means that is provided in the vertical vessel and that stirs the organic matter; a first heating means that heats the vertical vessel to pyrolyze and gasify the organic matter, a lead-out section connected to an upper portion of the vertical vessel and including a lead-out path through which a pyrolysis gas of the organic matter is led out; and a discharging section connected to a lower portion of the vertical vessel and including a discharge path through which an organic matter residue is continuously discharged. The continuous organic matter pyrolysis device according to the present invention is used filled with a solid heat transfer medium.

The continuous organic matter pyrolysis device according to the present invention heats and pyrolyzes the continuously charged organic matter, while stirring the organic matter in the vertical vessel filled with the solid heat transfer medium, and continuously discharges the organic matter residue, to thereby be capable of preventing coking due to the organic matter residue in the vertical vessel, suppressing a reduction in the heat conduction efficiency, and performing efficient continuous organic matter pyrolysis. In other words, stirring of the solid heat transfer medium in the vertical vessel prevents adhesion of the organic matter residue (carbide) onto the wall surface of the vertical vessel and continuous discharge of the unnecessary organic matter residue prevents the coking.

The organic matter to be processed (organic matter to be charged) in the present invention is not particularly limited, but for example includes a waste plastic and a waste rubber included in petrochemical products wastes, and may include a component other than the organic matter. Examples of the waste plastic include wastes composed mainly of a plastic separated from municipal garbage and industrial wastes, and, for example, the wastes composed mainly of thermoplastic resins such as polyethylene (PE), polypropylene (PP), polystyrene (PS), polyethylene terephthalate (PET), ABS, and the like. In addition, the waste plastic may also include polyvinyl chloride (PVC) containing chlorine as a composition component, thermosetting resins, FRP, and foreign matters such as paper. Examples of the waste rubber include synthetic rubber wastes such as waste tires, natural rubber wastes, etc. The organic matter may be in various shapes, such as fluff, beads, flakes, chips, granules, pellets, etc.

Hereinafter, a detailed description will be made on a configuration of the continuous organic matter pyrolysis device according to the present invention.

### [Charging section]

The charging section is a means that continuously charges an organic matter to be processed. In general, the charging section is provided at an upper portion of the vertical vessel and connected to a raw material charging device. As a specific example of the charging section, a raw material charging hopper can be named. Note that the continuous charging in the present invention refers to a concept including not only the literal continuous charging but also an aspect of intermittent charging.

### [Vertical vessel]

The vertical vessel is a vertically long vessel for accommodating the organic matter charged thereinto. The transverse sectional shape of the vertical vessel may be circular, elliptical, polygonal, etc. From the viewpoint of suppressing coking and easiness of cleaning, a circular shape is preferable. In addition, an L/D, which is a ratio of a height to a diameter of the vessel, is about 1 to 5, and preferably 1 to 3. The vertical vessel may be inclined with respect to the vertical direction. The inclination angle is 0 to 45 degrees, preferably 30 degrees or less. 15 degrees or less is even more preferable, 5 degrees or less is even further preferable and 0 degrees (vertical) is particularly preferable.

Note that, as described above, the vertical vessel is filled with the solid heat transfer medium at the time of the pyrolysis processing. The filling amount of the solid heat transfer medium in the vertical vessel is not particularly limited, but may be around 50 to 90 % by volume, for example. The solid heat transfer medium will be described later.

### [Stirring means]

The stirring means is a means that stirs the organic matter accommodated in the vertical vessel together with the solid heat transfer medium. The stirring means is not particularly limited as long as the accommodated matters (the organic matter and the solid heat transfer medium) can be stirred. An example of the stirring means can include a means including a rotation shaft provided in the vertical direction at the center portion of the vertical vessel, and a stirring blade that is connected to the rotation shaft and that rotates around the rotation shaft. The stirring means is preferably configured to be capable of scraping up the accommodated matters from the bottom to the top. The scraping up by the stirring means causes the accommodated matters to be stirred more efficiently and evenly. The pyrolysis of the organic matter is mainly performed at the upper portion (due to contact with the solid heat transfer medium located at the upper portion), which enables efficient pyrolysis by efficiently replacing the solid heat transfer medium located at the upper portion of the vertical vessel. Note that there may be two or more stirring means.

Examples of the types of the stirring blade of the stirring means can include ribbon, paddle, propeller, turbine, gate, and anchor types, etc., and a single type and a double-ribbon type are preferable, because these types can effectively scrape up the organic matter. The double-ribbon type is even more preferable.

The spacing (clearance) between the tip end portion of the stirring blade and the inner surface of the vertical vessel is not particularly limited as long as the spacing has a size allowing smooth falling of the scraped-up organic matter, and is 5 to 50 mm, for example. The spacing is preferably 5 to 20 mm.

The circumferential speed of the stirring blade is normally 0.1 m/s or more, preferably 0.5 to 5.0 m/s, even preferably 0.7 to 4.0 m/s, and even further preferably 1.0 to 3.0 m/s. Stirring the organic matter at such a speed enables sufficient stirring in the vertical vessel, which enables efficient pyrolysis processing of the organic matter.

### [First heating means]

The first heating means is a means that heats the vertical vessel, to pyrolyze and gasify the organic matter. The first heating means may be a direct heating means that directly introduces heat energy into the inside of the vertical vessel, or may be an indirect heating means that supplies heat energy from the outside of the vertical vessel. As an example of the direct heating means, a burner provided inside the vertical vessel can be named. In addition, examples of the indirect heating means include an electric heater and a gas burner, which heat the peripheral wall of the vertical vessel from outside, and a means that introduces a hot air, a heating medium oil, or the like into an outer space of the vertical vessel.

The internal temperature of the vertical vessel is normally 350 °C to 550 °C, and preferably about 400 °C to 450 °C.

### [Lead-out section]

The lead-out section is a means connected to the upper portion of the vertical vessel and including a lead-out path through which the pyrolysis gas of the organic matter is led out. The lead-out path is connected to a lid portion of the vertical vessel, or a side position of the upper portion of the vertical vessel, and leads the pyrolysis gas generated in the vertical vessel to a gas recovery device.

### [Discharging section]

The discharging section is a means connected to the lower portion of the vertical vessel and including a discharge path through which the organic matter residue is continuously discharged. The continuous discharge of the organic matter residue can reduce the organic matter residue to be accumulated in the vertical vessel, and suppress the deterioration of the stirring state due to an increase of the organic matter residue in the vertical vessel. The organic matter residue is discharged together with the solid heat transfer medium, mainly in the state adhering to the solid heat transfer medium or as a powdered carbide.

Note that the continuous discharge in the present invention refers to a concept including not only the literal continuous discharge but also an aspect of intermittent discharge. In other words, the organic matter residue can be discharged by controlling the discharge amount according to the charging amount of the organic matter (and the solid heat transfer medium). For example, an opening/closing valve is provided on the discharge path, to thereby be capable of controlling the discharge amount. In addition, a transferring rate of a transfer device to be described later is controlled to thereby be capable of controlling the discharge amount.

In conventional pyrolysis devices for waste petrochemical products, in addition to the organic matter residue such as the carbide produced at the time of pyrolysis, mixed substances and additives included at the time of manufacturing petrochemical products, and the inorganic matters such as metals and glasses mixed in the petrochemical products wastes, gradually increase in the devices, which has become a cause for reducing the processing capability. In contrast, the device according to the present invention continuously discharges these, to thereby be capable of maintaining the processing capability.

The discharging section (discharge path) is not particularly limited as long as it is connected to the lower portion of the vertical vessel. The discharging section is preferably disposed downward or laterally from the lower portion of the vertical vessel, and more preferably disposed downward from the lower portion of the vertical vessel. In general, since the charging section for charging the organic matter is provided at the upper portion of the vertical vessel, by disposing the discharging section at a position away from the charging section, the organic matter residue can be discharged in the state where the organic matter has been surely pyrolyzed.

Specifically, as the preferable aspect of the discharge path, for example, a configuration can be considered, in which the discharge path is constituted of a gap formed between an inner surface of a cylindrical body connected to the lower portion of the vertical vessel and an outer surface of a spacer provided in the cylindrical body. The inner surface is configured to taper toward the bottom portion of the cylindrical body, and the spacer is configured to taper toward the bottom portion thereof. In such a configuration, the organic matter residue (and the solid heat transfer medium) in the vertical vessel is discharged through an opening provided at the outer periphery of the bottom portion of the vertical vessel. The organic matter residue (and the solid heat transfer medium) is scraped up by the stirring means provided at the center portion of the vertical vessel, and thereafter smoothly discharged by a flow descending along the outer peripheral portion of the vertical vessel.

Similar to the vertical vessel, examples of the transverse sectional shape of the cylindrical body connected to the lower portion of the vertical vessel include circular, elliptical, polygonal shapes, etc., and preferably a circular shape. In addition, the cylindrical body may have such a structure that the inner surface thereof tapers toward the bottom portion, and the outer shape of the cylindrical body can be a rectangular parallelepiped shape, a columnar shape, an inverted truncated cone shape, an inverted cone shape, etc.

The inclination angle of the inner surface of the cylindrical body (inclination angle of the inner surface of the cylindrical body with respect to the bottom surface of the vertical vessel) is preferably 30 to 85 degrees, more preferably 45 to 80 degrees, and even more preferably 45 to 75 degrees. By setting the inclination angle to be within this range, the organic matter residue can be smoothly led to the discharge port located at the bottom portion of the cylindrical body.

The spacer provided inside the cylindrical body, which forms the discharge path together with the cylindrical body, is not particularly limited as long as the outer surface of the spacer has a shape tapered toward the bottom portion of the spacer. It is preferable that the inclination angle of the outer surface of the spacer is equal to that of the inner surface of the cylindrical body. Specifically, examples of the outer shape of the spacer include an inverted truncated cone shape and an inverted cone shape.

The spacing of the gap formed between the inner surface of the cylindrical body and the outer surface of the spacer is preferably 1 to 150 mm, more preferably 10 to 80 mm, even more preferably 10 to 40 mm. By setting the spacing of the gap to be within this range, the organic matter residue can be smoothly led to the discharge port located at the bottom portion.

In addition, it is preferable that the spacer includes, on the inclined surface thereof, a discharge path stirring member, and the spacer is connected to the rotation shaft of the stirring member provided in the vertical direction at the center portion of the vertical vessel, to rotate around the rotation shaft. Such a configuration can prevent clogging and retention of the organic matter residue in the discharge path, to thereby enable stable discharge. Specifically, an example of the discharge path stirring means includes rod members provided on the inclined surface of the spacer.

The organic matter residue to be discharged from the discharging section may be discharged by the gravity drop from the discharge port located at the bottom portion. However, from the viewpoint of bridging prevention, the organic matter residue is preferably discharged with power assistance. In other words, the continuous organic matter pyrolysis device according to the present invention preferably includes the transfer device connected to the discharging section. This enables the organic matter residue to be discharged at an adjusted discharge rate. An example of the transfer device includes a screw conveyor, etc. In addition, it is preferable that the transfer device includes a cooling means that cools the organic matter residue to be discharged.

### [Second heating means]

The continuous organic matter pyrolysis device according to the present invention is preferably provided with the second heating means that heats the discharge path of the discharging section. The second heating means can heat the organic matter residue to be discharged, and surely pyrolyze the undecomposed organic matter. In particular, the discharge path (for example, the gap between the cylindrical body and the spacer) has a cross-sectional area smaller than that of the vertical vessel. Such a configuration allows the heat energy of the heating means to be transferred sufficiently to the organic matter passing through the discharge path, which can more surely prevent the organic matter from being remained undecomposed.

The second heating means may be a means that heats the discharging section to the same temperature as that of the vertical vessel, but is preferably a means that can heat the discharging section to a higher temperature than that of the vertical vessel. For example, the temperature of the discharging section is preferably 5 °C or more higher than that of the vertical vessel, more preferably 5 °C to 100 °C higher, even more preferably 8 °C to 70 °C higher, and most preferably 10 °C to 50 °C higher.

In addition, the second heating means may be provided separately from the first heating means. Alternatively, the first heating means may also serve as the second heating means. Examples of the second heating means include an electric heater and a gas burner, which heat the peripheral wall of the discharge path from outside, and a means that introduces a hot air into the outer space of the discharge path.

In the case where the first heating means serves also as the second heating means, a configuration of the heating means can include the one in which a heating medium passage surrounding the vertical vessel and the discharging section is provided and the heating medium such as a hot air is introduced into the heating medium passage. In such a configuration, an inlet of the heating medium passage is provided on the discharging section side and an outlet of the heating medium passage is provided on the vertical vessel side, thereby enabling the temperature at the discharging section side to be higher than that of the vertical vessel side.

Subsequently, the continuous organic matter pyrolysis method of the present invention will be described. Note that the continuous organic matter pyrolysis method of the present invention can be achieved by using the continuous organic matter pyrolysis device described above.

The continuous organic matter pyrolysis method according to the present invention includes: a continuous charging step of continuously charging the organic matter and the solid heat transfer medium into the vertical vessel filled with the solid heat transfer medium; a pyrolysis step of pyrolyzing the organic matter by heating and stirring the organic matter and the solid heat transfer medium that are charged into the vertical vessel in the continuous charging step; and a continuous discharging step of continuously discharging the organic matter residue generated in the pyrolysis step to the outside of the vertical vessel with a part of the solid heat transfer medium.

According to the organic matter pyrolysis method of the present invention, the organic matter, which is continuously charged, is heated and pyrolyzed, while being stirred in the vertical vessel filled with the solid heat transfer medium, and the organic matter residue is continuously discharged, which is capable of preventing the coking of the vertical vessel due to the organic matter residue, suppressing a decrease in the heat conduction efficiency, and achieving efficient continuous organic matter pyrolysis. In other words, stirring the solid heat transfer medium in the vertical vessel prevents the organic matter residue (carbide) from adhering to the wall surface of the vertical vessel, and continuously discharging the unnecessary organic matter residue prevents the coking.

The organic matter that can be used in the organic matter pyrolysis method of the present invention is the same as the one used in the above-described continuous organic matter pyrolysis device. Description on other components and configurations that are the same as those of the continuous organic matter pyrolysis device will be omitted as appropriate.

### [Continuous charging step]

The continuous charging step is a step of continuously charging the organic matter and the solid heat transfer medium into the vertical vessel filled with the solid heat transfer medium. Note that the continuous charging refers to a concept including not only the literal continuous charging but also an aspect of intermittent charging. In addition, the organic matter and the solid heat transfer medium may be charged simultaneously or separately. The continuous charging step and the continuous discharging step can maintain the organic matter and the solid heat transfer medium in the vertical vessel at a certain ratio.

### [Pyrolysis step]

The pyrolysis step is a step of pyrolyzing the organic matter by heating and stirring the organic matter and the solid heat transfer medium that are charged into the vertical vessel in the continuous charging step. The organic matter and the solid heat transfer medium are heated and stirred, to thereby enable efficient heat conduction to the organic matter, prevent the coking due to the organic matter residue in the vertical vessel, and maintain the high heat conduction efficiency. As a result, the organic matter can be pyrolyzed efficiently. In addition, in order to perform more efficient pyrolysis, it is preferable to scrape up the organic matter and the solid heat transfer medium from the bottom to the top, to stir and mix them.

The charging amount of the organic matter (undecomposed organic matter) with respect to the solid heat transfer medium accommodated in the vertical vessel is 200 kg/h or less with respect to the volume 100 L of the solid heat transfer medium accommodated in the vertical vessel, and preferably 1 to 100 kg/h, more preferably 1 to 50 kg/h, and even more preferably 30 kg/h. Setting the charging amount to be within this range enables the efficient pyrolysis of the organic matter and prevents a generation of undecomposed organic matter. In addition, the pyrolysis can be performed while maintaining the inside of the vertical vessel in a dry state.

The ratio of the organic matter (undecomposed organic matter) to the solid heat transfer medium discharged from the vertical vessel is preferably 5 mass% or less, more preferably 3 mass% or less, even more preferably 1 mass% or less. In the organic matter pyrolysis method of the present invention, undecomposed organic matter is not included in the discharged matter, which enables an efficient pyrolysis gas recovery.

The size of the solid heat transfer medium can be appropriately set depending on the type of the organic matter to be charged, and the diameter is about 0.1 µm to 150 mm, for example. Specifically, examples of the solid heat transfer medium include particulates having a diameter of 0.1 µm to 1 mm, or a lumpy object having a diameter of more than 1 mm to about 15 mm. The shape of the solid heat transfer medium is not specifically limited, but from the perspective of improving liquidity, a spherical shape is preferable, a shape close to a perfect sphere is even more preferable, and a perfect sphere is especially preferable. Such a shape can suppress the stirring resistance due to the solid heat transfer medium and the stirring resistance due to the deposition of fine powders caused by abrasion between the solid heat transfer media, which enables a compact stirring motor and stirring blade to be achieved. Changing the size of the solid heat transfer medium depending on the type of the organic matter enables easy separation of the solid heat transfer medium and the organic matter residue that are discharged. Specifically, when the organic matter is a waste plastic, particulates having a diameter of about 0.1 µm to 1 mm can be preferably used, and when the organic matter is a waste tire or the like whose deposition amount of carbide is large and separation between the carbide and the solid heat transfer medium is desired after the pyrolysis, a lump of material having a diameter of more than 1 mm to 150 mm can be preferably used.

The solid heat transfer medium can be appropriately determined depending on the type of the organic matter to be charged, and examples of the solid heat transfer medium include solids such as an alkaline earth metal-based solid, a silica-based solid, an alumina-based solid, sand, and a zeolite-based solid. Examples of the alkaline earth metal-based solid include calcium-based solids such as calcium hydroxide and calcium carbonate, and magnesium-based solids such as magnesium hydroxide and magnesium carbonate. In addition, examples of the zeolite-based solid include zeolite, FCC catalyst (catalyst used in fluid catalytic cracking in petroleum refining), FCC waste catalyst (used FCC catalyst), etc.

The pyrolysis temperature in the pyrolysis step is not specifically limited, but is preferably 350 °C to 550 °C. In addition, the pressure in the vertical vessel in the pyrolysis step is not specifically limited, but is preferably 100 kPa (atmospheric pressure) or less, for example.

### [Recovery step]

The recovery step is a step of recovering the pyrolysis gas generated in the pyrolysis step. The pyrolysis gas recovered in the present step is separated into a light hydrocarbon gas such as methane and other oil components, to be used.

### [Continuous discharging step]

The continuous discharging step is a step of continuously discharging the organic matter residue generated in the pyrolysis step to the outside of the vertical vessel with a part of the solid heat transfer medium. In the present step, it is preferable to heat the organic matter residue and the solid heat transfer medium that are discharged. In addition, in the present step, the heating temperature is preferably higher than the heating temperature in the pyrolysis step.

When the discharging section is heated, the retention time of the organic matter residue in the discharging section is preferably 10 minutes or longer, more preferably 30 minutes or longer, and even more preferably 60 minutes or longer. This enables the ratio of the undecomposed organic matter in the organic matter residue to be discharged to be 5 mass% or less.

Subsequently, description will be made on a recycled organic matter recovery system using the above-described continuous organic matter pyrolysis device of the present invention.

The recycled organic matter recovery system of the present invention includes the above-described continuous organic matter pyrolysis device, an organic matter charging device that continuously charges an organic matter into the continuous organic matter pyrolysis device, and a gas recovery device that recovers a pyrolysis gas of the organic matter pyrolyzed in the continuous organic matter pyrolysis device.

The recycled organic matter recovery system according to the present invention enables efficient recovery of useful recycled organic matter from the waste organic matter and the like.

Hereinafter, a detailed description will be made on one embodiment of the continuous organic matter pyrolysis device of the present invention, with reference to the drawings.

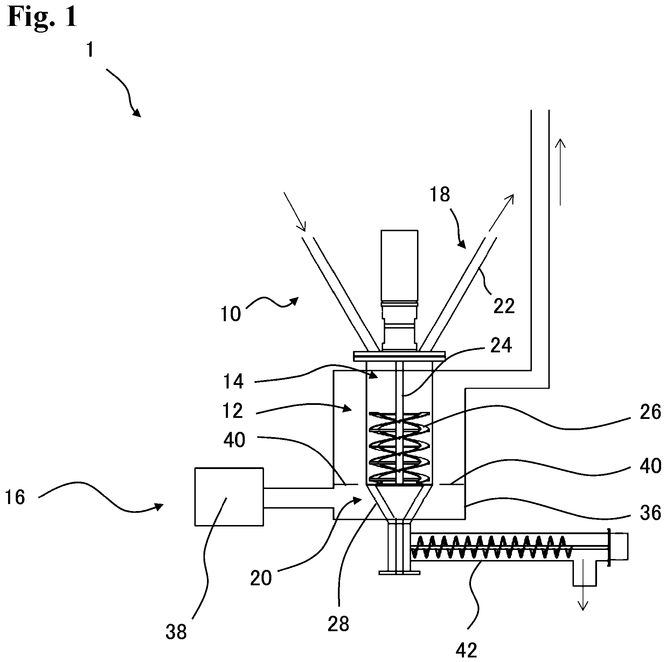

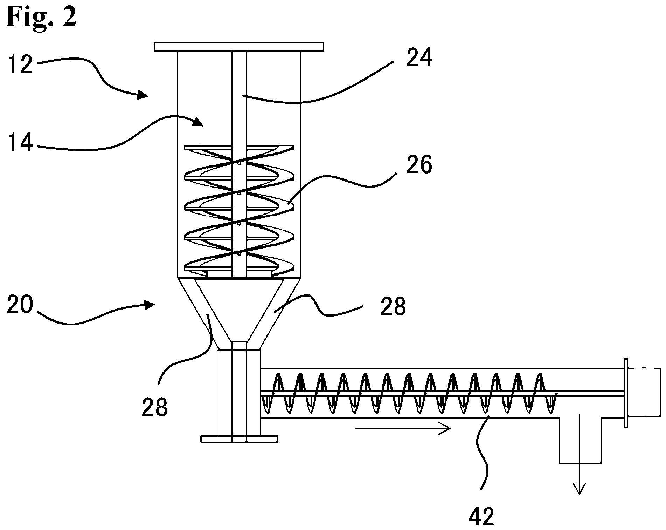

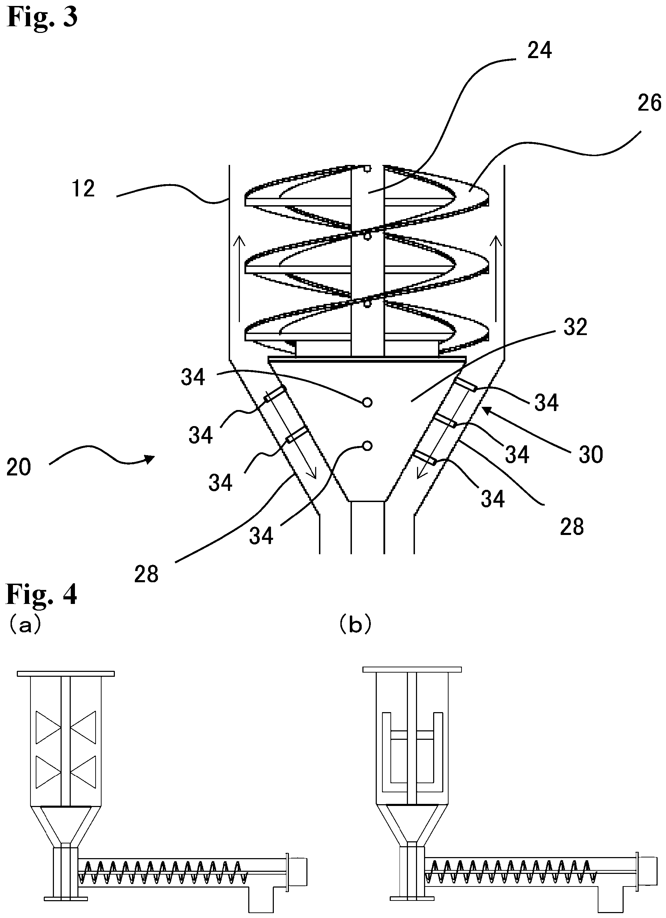

Fig. 1 is an explanatory view of the continuous organic matter pyrolysis device according to the one embodiment of the present invention, Fig. 2 is an explanatory view of the vertical vessel and the discharging section of the continuous organic matter pyrolysis device shown in Fig. 1, and Fig. 3 is an enlarged view of the discharging section of the continuous organic matter pyrolysis device shown in Fig. 1. Fig. 4 is an explanatory view of a stirring blade of a continuous organic matter pyrolysis device according to another embodiment of the present invention, and (a) shows a paddle-type stirring blade and (b) shows a gate-type stirring blade.

As shown in Fig. 1 and Fig. 2, the continuous organic matter pyrolysis device 1 according to the one embodiment of the present invention includes a charging section 10 that continuously charges the organic matter, a vertical vessel 12 for accommodating the organic matter, a stirring means 14 that stirs the organic matter, a first heating means 16 that heats the vertical vessel 12 to pyrolyze and gasify the organic matter, a lead-out section 18 that leads out the pyrolysis gas of the organic matter, and a discharging section 20 that continuously discharges the organic matter residue.

As shown in Fig. 1, the charging section 10 is provided at the upper portion of the vertical vessel 12 and connected to the raw material charging device. In addition, the lead-out section 18 includes a lead-out path 22 connected to the upper portion of the vertical vessel 12 and configured to lead out the pyrolysis gas of the organic matter. The lead-out path 22 is connected to the lid portion of the vertical vessel 12 and guides the pyrolysis gas generated in the vertical vessel 12 to the gas recovery device.

As shown in Fig. 1 and Fig. 2, the vertical vessel 12 is vertically long vessel capable of holding inside thereof about 200 L of the organic matter such as the waste plastic, the waste rubber, or the like, charged from the charging section 10. Furthermore, the vertical vessel 12 is filled, up to a volume of about 70% thereof, with the solid heat transfer medium at the time of the pyrolysis processing.

As shown in Fig. 1 and Fig. 2, the stirring means 14 includes a rotation shaft 24 provided in the vertical direction at the center portion of the vertical vessel 12, and a double-ribbon type stirring blade 26 that is connected to the rotation shaft 24 and that rotates around the rotation shaft 24. The stirring means is configured to be able to scrape up the accommodated matters from the bottom to the top.

As shown in Fig. 3, the discharging section 20 includes a discharge path 28 that is connected to the lower portion of the vertical vessel 12 and configured to continuously discharge the organic matter residue. The discharge path 28 is constituted of a gap of about 40 mm formed between the inner surface of the cylindrical body 30 connected to the lower portion of the vertical vessel 12 and the outer surface of the spacer 32 provided inside the cylindrical body 30. The inner surface of the cylindrical body is configured to taper toward the bottom portion of the cylindrical body, and the spacer is configured to taper toward the bottom portion thereof. The discharge path 28 communicates with the opening provided at the outer periphery of the bottom portion of the vertical vessel 12. The cylindrical body 30 is formed in an inverted truncated cone shape, the transverse sectional shape of which is circular. In addition, the spacer 32 is formed in an inverted truncated cone shape with the inclined angle of 60 degrees which is the same as the inclined angle of the inner surface of the cylindrical body 30. Furthermore, the spacer 32 includes, on the inclined surface thereof, rod members 34 as a discharge path stirring means. The spacer 32 is connected to the rotation shaft 24 of the stirring means 14 provided in the vertical direction at the center portion of the vertical vessel 12, and configure to rotate around the rotation shaft 24.

As shown in Fig. 1, the continuous organic matter pyrolysis device 1 includes the first heating means 16 that heats the vertical vessel 12 to pyrolyze and gasify the organic matter. The first heating means 16 is a means that introduces the hot air generated by a hot air generator 38 into a heating medium passage 36 surrounding the vertical vessel 12 and the discharging section 20. In addition, the first heating means 16 serves also as a second heating means that heats the discharge path 28 of the discharging section 20. The heating medium passage 36 has an inlet provided on the discharging section 20 side, and an outlet provided on the vertical vessel 12 side, and a baffle board 40 provided between the inlet and the outlet, to partition between the outside of the vertical vessel 12 and the outside of the discharging section 20. Such a configuration enables the temperature of the discharging section 20 side to be higher.

In addition, as shown in Fig. 1, the continuous organic matter pyrolysis device 1 includes a cooling screw conveyor 42 connected to the discharging section 20 and serving as a conveying device and a cooling means. The cooling screw conveyor 42 is capable of cooling the organic matter discharged from the discharging section 20 while transferring the organic matter.

Note that, in the continuous organic matter pyrolysis device 1, the double-ribbon type stirring blade 26 is used as the stirring blade of the stirring means 14. However, as shown in Fig. 4, another stirring blade such as a paddle-type stirring blade (a) or a gate-type stirring blade (b) may be used.

### Examples

### (Example 1) [Continuous discharge test]

Analysis of the organic matter residue, which is continuously discharged, was performed using the continuous organic matter pyrolysis device and the continuous organic matter pyrolysis method according to the present invention.

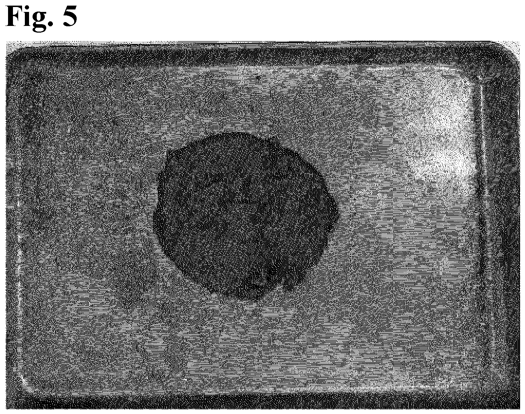

First, the vertical vessel with a capacity of 100 L is filled with 70L of waste FCC catalyst particulates, and the inside of the vertical vessel was heated at 450 °C and the discharge path of the discharging section was heated at 480 °C. After the heat was transferred to the entire inside of the vertical vessel to be in a stable state, discharge was started by conveying with the cooling screw conveyor connected to the discharging section, to start the continuous processing. The processing was performed such that the waste plastic was continuously charged at the rate of 30 L/h, the waste FCC catalyst was continuously charged into the vertical vessel up to 70L, and the ratio of the undecomposed waste plastic to the waste FCC catalyst was maintained at 3%. Then, 10g of organic matter residue was collected from the organic matter residue discharged one hour after the start of the continuous processing (Fig. 5).

Next, the 10g of organic matter residue was fired at 450 °C for one hour. The mass of the organic matter residue after the firing was measured.

The result is shown in Table 1 below.

**[Table 1]**

| | | temperature [°C] | time [h] | mass [g] | decreased amount [g] | decreased amount (in total) [g] | decreased ratio [%] | decreased ratio (in total) [%] |
|---|---|---|---|---|---|---|---|---|
| discharged organic matter residue | before firing | - | - | 10.0 | - | - | - | - |
| | after firing (oil) | 450 | 1.0 | 10.0 | 0.0 | 0.0 | 0 | 0 |

As shown in Table 1, there was no difference in the mass before and after the firing at 450 °C for one hour. 450 °C is a temperature at which oil vaporizes, but no mass change occurred. This fact shows that the organic matter that would have become oil did not remain as the organic matter residue and all of the organic matter was pyrolyzed.

### INDUSTRIAL APPLICABILITY

The organic matter pyrolysis device of the present invention can be used for recovering oil from the organic matter such as waste plastic, to thereby provide an industrial usefulness.

### REFERENCE SIGNS LIST

- 1: continuous organic matter pyrolysis device
- 10: charging section
- 12: vertical vessel
- 14: stirring means
- 16: first heating means (second heating means)
- 18: lead-out section
- 20: discharging section
- 22: lead-out path
- 24: rotation shaft
- 26: double-ribbon type stirring blade
- 28: discharge path
- 30: cylindrical body
- 32: spacer
- 34: rod member (discharge path stirring member)
- 36: heating medium passage
- 38: hot air generator
- 40: baffle board
- 42: cooling screw conveyor

## Claims

1. A continuous organic matter pyrolysis device comprising:
a charging section that continuously charges an organic matter;
a vertical vessel for accommodating the organic matter charged from the charging section;
a stirring means that is provided in the vertical vessel and that stirs the organic matter;
a first heating means that heats the vertical vessel to pyrolyze and gasify the organic matter,
a lead-out section connected to an upper portion of the vertical vessel and including a lead-out path through which a pyrolysis gas of the organic matter is led out; and
a discharging section connected to a lower portion of the vertical vessel and including a discharge path through which an organic matter residue is continuously discharged.

2. The continuous organic matter pyrolysis device according to claim 1, further comprising a second heating means that heats the discharge path of the discharging section.

3. The continuous organic matter pyrolysis device according to claim 2, wherein the second heating means is a means that heats the discharging section to a temperature higher than a temperature of the vertical vessel.

4. The continuous organic matter pyrolysis device according to any one of claims 1 to 3, wherein the discharge path of the discharging section is disposed downward from the lower portion of the vertical vessel.

5. The continuous organic matter pyrolysis device according to any one of claims 1 to 3, wherein the discharge path of the discharging section is disposed laterally from the lower portion of the vertical vessel.

6. The continuous organic matter pyrolysis device according to any one of claims 1 to 3, wherein
the discharge path of the discharging section is constituted of a gap formed between an inner surface of a cylindrical body connected to the lower portion of the vertical vessel and an outer surface of a spacer provided inside the cylindrical body, the inner surface tapering toward a bottom portion of the cylindrical body, the spacer tapering toward a bottom portion of the spacer, and
the discharge path communicates with an opening provided at an outer periphery of a bottom portion of the vertical vessel.

7. The continuous organic matter pyrolysis device according to any one of claims 1 to 3, wherein
the stirring means includes a rotation shaft provided in a vertical direction at a center portion of the vertical vessel, and a stirring blade that is connected to the rotation shaft and that rotates around the rotation shaft.

8. The continuous organic matter pyrolysis device according to claim 7, wherein the stirring means is a means that is able to scrape up the organic matter from bottom to top.

9. The continuous organic matter pyrolysis device according to claim 6, wherein the spacer includes a discharge path stirring member on an inclined surface of the spacer, and the spacer is connected to a rotation shaft of the stirring means provided in a vertical direction at a center portion of the vertical vessel and rotates around the rotation shaft.

10. A continuous organic matter pyrolysis method comprising:
a continuous charging step of continuously charging an organic matter and a solid heat transfer medium into a vertical vessel filled with the solid heat transfer medium;
a pyrolysis step of pyrolyzing the organic matter by heating and stirring the organic matter and the solid heat transfer medium that are charged into the vertical vessel in the continuous charging step; and
a recovery step of recovering a pyrolysis gas generated in the pyrolysis step; and
a continuous discharging step of continuously discharging an organic matter residue generated in the pyrolysis step to an outside of the vertical vessel with a part of the solid heat transfer medium.

11. The continuous organic matter pyrolysis method according to claim 10,
wherein the organic matter residue and the solid heat transfer medium that are discharged are heated in the continuous discharging step.

12. The continuous organic matter pyrolysis method according to claim 11,
wherein, in the continuous discharging step, the organic matter residue and the solid heat transfer medium that are discharged are heated at a temperature higher than a heating temperature in the pyrolysis step.

13. The continuous organic matter pyrolysis method according to any one of claims 10 to 12, wherein the organic matter and the solid heat transfer medium are continuously charged such that a charging amount of the organic matter with respect to 100 L of the solid heat transfer medium in the vertical vessel is within a range of 1 to 50 kg/h.

14. The continuous organic matter pyrolysis method according to any one of claims 10 to 12, wherein the solid heat transfer medium is a spherical-shaped solid having a diameter of 0.1 µm to 150 mm.

15. The continuous organic matter pyrolysis method according to any one of claims 10 to 12, wherein the solid heat transfer medium is at least one type of solid selected from a group consisting of an alkaline earth metal-based solid, a silica-based solid, sand, an alumina-based solid, and a zeolite-based solid.

16. The continuous organic matter pyrolysis method according to any one of claims 10 to 12, wherein the organic matter charged in the continuous charging step is a waste plastic or a waste rubber.

17. The continuous organic matter pyrolysis method according to any one of claims 10 to 12, wherein the continuous organic matter pyrolysis device as claimed in claim 1 is used.

18. A recycled organic matter recovery system comprising:
the continuous organic matter pyrolysis device as claimed in any one of claims 1 to 3;
an organic matter charging device that continuously charges an organic matter into the continuous organic matter pyrolysis device; and
a gas recovery device that recovers a pyrolysis gas of the organic matter pyrolyzed in the continuous organic matter pyrolysis device.
